# EUROPEAN PATENT APPLICATION

(11) **EP 3 338 554 A1**
(43) Date of publication of application: **27.06.2018**
(21) Application number: 16206280.6
(22) Date of filing: 22.12.2016
(51) Int. Cl.: A01N 59/00, A01N 25/22, A01N 25/00, A01P 1/00, C02F 1/72, C02F 5/14, C01B 15/037

(54) **COMPOSITION AND METHOD FOR PREVENTING DEPOSIT FORMATION IN A DRIP IRRIGATION SYSTEM**

(71) Applicant: Evonik Degussa GmbH, 45128 Essen (DE)
(72) Inventor: CHRIST, Philipp, 64807 Dieburg (DE); DIETZ, Thomas, 63808 Haibach (DE); GLENNEBERG, Jürgen, 6065 Offenbach (DE); KOTTKE, Ulrike, 63589 Linsengericht-Großenhausen (DE); LEININGER, Stefan, 63505 Langenselbold (DE)

(57) **Abstract**

Deposit formation in a drip irrigation system can be prevented with a treatment composition containing from 10 to 50 % by weight hydrogen peroxide, from 1 to 5 % by weight 1-hydroxyethylidene-1,1-diphosphonic acid and up to 0.5 ppm by weight arsenic, which is added to a water stream introduced into the drip irrigation system in an amount providing a concentration of from 5 to 100 ppm by weight hydrogen peroxide and from 0.5 to 10 ppm by weight 1-hydroxyethylidene-1,1-diphosphonic acid in the water stream.

## Description

### Field of the invention

The invention relates to a composition and a method for preventing deposit formation in a drip irrigation system which can prevent both biofilm formation and mineral scale formation by addition of a single storage-stable composition to the irrigation water.

### Background of the invention

Drip irrigation systems are used for irrigating crops in arid climates and for irrigating plants cultivated in greenhouses. Drip irrigation systems in general have conduits with a multitude of emitters through which the irrigation water is distributed and are usually operated at low flow rates with long duration of flows, often extending for days or weeks. Usually, several conduits are operated in parallel, feeding irrigation water with a single feed pump and a manifold to which the conduits are connected.

Drip irrigation systems are sensitive to deposit formation in the conduits and the emitters, because deposits in the conduits can lead to maldistribution of irrigation water to the conduits and blocking of conduits and emitters will have the effect that some of the plants are insufficiently irrigated or not irrigated at all, which reduces crop yields. Deposits can form by growth of microorganisms, such as bacteria and fungi, which leads to biofilm deposits. Deposits can also form by precipitation of water-insoluble minerals from irrigation water containing multiply charged metal ions, such as calcium or magnesium ions. It is common practice to prevent emitter plugging in irrigation systems by chlorination of the irrigation water to counteract biofilm formation and by flushing with acid or by adding a polyphosphate scale inhibitor for preventing scale formation, as described in bulletin 258 of the Florida cooperative extension service, published at http://ufdc.ufl.edu/UF00008536/00001.

US 7,601,266 describes a method for providing unrestricted flow of irrigation water through an irrigation network by adding a solution containing chlorine dioxide as a biofilm reducing agent and a phosphonate as a mineral deposit distorting agent to the irrigation water. The solution containing chlorine dioxide is generated on site by mixing a solution, containing hydrochloric acid, water and phosphonobutanetricarboxylic acid or 1-hydroxyethylidene-1,1-diphosphonic acid with an aqueous solution of sodium chlorite.

AU 3 505 999 A1 describes an agent for inhibition and removal of built ups and sediments in irrigation systems comprising polyphosphoric acid or a polyphosphate and a mixture of peroxoacetic acid and hydrogen peroxide. The document teaches that separate liquid concentrates of the complexing phosphate and of the oxidizing additive have to be used to ensure long term efficiency and a long shelf life.

EP 0 380 171 describes an agent for the cleaning of irrigation systems containing an acrylic acid homo- or copolymer polyelectrolyte and hydrogen peroxide. The document also describes a process of cleaning of irrigation systems in which the polyelectrolyte and the hydrogen peroxide are successively introduced through the system in arbitrary order.

Compositions containing hydrogen peroxide are marketed for preventing biofilm formation in drip irrigation systems under the trade names EcoClearProx^{®}, HydroClean, OXY-PLUS, LOXYDE^{®} and FREEBAC-CLEAROXYL^{®}.

Chlorine and chlorine dioxides are hazardous chemicals that have to be generated on site. Chlorine, chlorine dioxide and peroxyacetic acid are also highly volatile and can give rise to irritating and even toxic vapors during handling. The additives used in the prior art methods also have the disadvantage that they are either not sufficiently storage stable or have to be stored separately for preventing decomposition during storage. Therefore, there is still a need for a method for preventing deposit formation in a drip irrigation system that can be carried out by adding a single storage-stable concentrated composition to the irrigation water, which composition does not form hazardous vapors.

US 2004/0101461 A1 discloses compositions consisting essentially of hydrogen peroxide, one or more complexing agents based on phosphonic acids in an amount from 10 to 60 % by weight based on the amount of hydrogen peroxide, water, and up to 10 % by weight, based on the amount of hydrogen peroxide, of further components. US 2004/0101461 A1 teaches these compositions to be useful for preparing stabilized soil oxygenating or micronutrient solutions containing hydrogen peroxide and dissolved Fe, Mn, Cu, Mo and Zn.

### Summary of the invention

The inventors of the current invention have now found that a concentrated composition containing hydrogen peroxide and 1-hydroxyethylidene-1,1-diphosphonic acid (HEDP) is efficient for preventing deposit formation in drip irrigation systems, providing hydrogen peroxide concentrations sufficient for preventing biofilm formation and concentrations of HEDP sufficient for preventing mineral scale formation throughout the entire drip irrigation system even at low flow rates. The inventors have further found that such compositions having a low content of arsenic show superior storage stability compared to compositions prepared from commercial grades of HEDP marketed for stabilizing hydrogen peroxide which have a higher content of arsenic.

Subject of the invention is therefore a treatment composition for preventing deposit formation in a drip irrigation system, containing from 10 to 50 % by weight hydrogen peroxide, from 1 to 5 % by weight 1-hydroxyethylidene-1,1-diphosphonic acid and up to 0.5 ppm by weight arsenic as well as the use of this treatment composition for preventing deposit formation in a drip irrigation system.

A further subject of the invention is a method for preventing deposit formation in a drip irrigation system, wherein a treatment composition containing from 10 to 50 % by weight hydrogen peroxide, from 1 to 5 % by weight 1-hydroxyethylidene-1,1-diphosphonic acid and up to 0.5 ppm by weight arsenic is added to a water stream introduced into the drip irrigation system in an amount providing a concentration of from 5 to 100 ppm by weight hydrogen peroxide and from 0.5 to 10 ppm by weight 1-hydroxyethylidene-1,1-diphosphonic acid in the water stream.

Brief description of drawings
Fig. 1 to 4 show the peroxide concentrations in mg/l along the distribution conduits of the drip irrigation system to which treatment compositions A to D were added in example 15.
Fig. 5 to 10 show the deposits flushed from the conduits of the drip irrigation system of example 16 with addition of treatment compositions A (Fig. 5), B (Fig. 6), C (Fig. 7), D (Fig. 8) and E (Fig. 9) and without addition of a treatment composition (Fig. 10).

### Detailed description of the invention

The treatment composition of the invention contains from 10 to 50 % by weight hydrogen peroxide, from 1 to 5 % by weight 1-hydroxyethylidene-1,1-diphosphonic acid and up to 0.5 ppm by weight arsenic. The treatment composition preferably contains from 25 to 50 % by weight hydrogen peroxide and from 2 to 4 % by weight 1-hydroxyethylidene-1,1-diphosphonic acid and most preferably about 30 % by weight hydrogen peroxide and about 3 % by weight 1-hydroxyethylidene-1,1-diphosphonic acid. The treatment composition preferably contains hydrogen peroxide and 1-hydroxyethylidene-1,1-diphosphonicacid in a weight ratio of from 2:1 to 50:1, more preferably in a weight ratio of from 5:1 to 25:1 and most preferably in a weight ratio of about 10:1. The treatment composition preferably contains from 0.01 to 0.5 ppm by weight arsenic. The amount of arsenic is calculated for elemental arsenic, although the arsenic will typically be present in the composition in dissolved form, typically as dissolved arsenate.

The treatment composition of the invention is preferably prepared by mixing hydrogen peroxide with an aqueous solution of 1-hydroxyethylidene-1,1-diphosphonic acid, which aqueous solution contains less than 70 ppm chloride, less than 20 ppm iron and less than 10 ppm arsenic, each based on the weight of 1-hydroxyethylidene-1,1-diphosphonic acid contained in the aqueous solution. Suitable aqueous solutions of 1-hydroxyethylidene-1,1-diphosphonic acid with low contents of chloride, iron and arsenic are commercially available from Italmatch Chemicals S.p.A. under the trade name Dequest^{®} 2010 LC.

The treatment composition of the invention is preferably prepared by mixing an aqueous hydrogen peroxide solution having a total organic carbon content of less than 100 mg/kg with an aqueous solution of 1-hydroxyethylidene-1,1-diphosphonic acid. An aqueous hydrogen peroxide solution with a total organic carbon content of less than 100 mg/kg may be obtained by distillation, crystallization or reverse osmosis, with reverse osmosis being preferred. The compositions obtainable by these preparation methods are preferred embodiments of the treatment composition of the invention.

The treatment composition of the invention has a high storage stability which is superior to the stability of a composition obtained by mixing hydrogen peroxide with a commercially available aqueous solution of 1-hydroxyethylidene-1,1-diphosphonic acid containing more than 70 ppm chloride, 20 ppm iron and 10 ppm arsenic, each based on the weight of 1-hydroxyethylidene-1,1-diphosphonic acid contained in the aqueous solution, which is typically used as a hydrogen peroxide stabilizer.

The treatment composition of the invention can be used for preventing deposit formation in a drip irrigation system, preferably by using the treatment composition of the invention in the method of the invention.

In the method of the invention for preventing deposit formation in a drip irrigation system, a treatment composition of the invention is added to a water stream introduced into the drip irrigation system. The treatment composition contains from 10 to 50 % by weight hydrogen peroxide, from 1 to 5 % by weight 1-hydroxyethylidene-1,1-diphosphonic acid, and up to 0.5 ppm by weight arsenic. The treatment composition preferably contains from 25 to 50 % by weight hydrogen peroxide and from 2 to 4 % by weight 1-hydroxyethylidene-1,1-diphosphonic acid. In a most preferred embodiment, the treatment composition contains about 30 % by weight hydrogen peroxide and about 3 % by weight 1-hydroxyethylidene-1,1-diphosphonic acid. The treatment composition preferably contains from 0.01 to 0.5 ppm arsenic. The treatment composition preferably comprises less than 10 ppm arsenic based on the weight of 1-hydroxyethylidene-1,1-diphosphonic acid. A low content of arsenic in the treatment composition prevents or reduces uptake of arsenic into an irrigated crop. The treatment composition may further comprise phosphoric acid or a phosphate salt, preferably in an amount providing a phosphorus content calculated as orthophosphate of from 0.1 to 50 mg/kg based on the weight of hydrogen peroxide.

The treatment composition is added to a water stream introduced into a drip irrigation system. The treatment composition may be added directly to the water stream, i.e. without previous dilution, or it may be added to the water stream after dilution. The treatment composition may be diluted with water or with an aqueous nutrient solution before it is added to the water stream. The concentration of hydrogen peroxide after dilution is preferably from 0.05 to 1.0 % by weight. The aqueous nutrient solution may comprise a nitrogen fertilizer, such as an ammonium salt, a nitrate salt, urea or a combination of these compounds. The aqueous nutrient solution may also comprise a potassium salt, a phosphorus fertilizer, such as a phosphate salt, or a combination of these compounds. The aqueous nutrient solution may further comprise salts of essential metals selected from iron, copper, molybdenum, zinc and manganese. Diluting the treatment composition with an aqueous nutrient solution has the advantage that the method of the invention can be carried out without extra dosing equipment in a drip irrigation system comprising a dosing unit for aqueous nutrient solution.

The treatment composition may be added to the water stream continuously or intermittently, with continuous addition being preferred. When the treatment composition is added intermittently, the treatment composition is added during at least 50 % of the time the water stream is flowing. Such continuous or extended intermittent addition prevents the formation of biofilms and mineral deposits at concentrations of hydrogen peroxide and 1-hydroxyethylidene-1,1-diphosphonic acid that are much lower than the concentrations needed for removing already formed biofilms and mineral deposits.

The treatment composition is added to the water stream in an amount providing a concentration of from 5 to 100 ppm by weight hydrogen peroxide and from 0.5 to 10 ppm by weight 1-hydroxyethylidene-1,1-diphosphonic acid in the water stream, preferably in an amount providing a concentration of from 5 to 50 ppm by weight hydrogen peroxide and from 0.5 to 5 ppm by weight 1-hydroxyethylidene-1,1-diphosphonic acid. These concentrations refer to the composition of the water stream immediately after addition of the treatment composition. Preferably, the treatment composition is added in an amount providing a concentration of at least 0.5 ppm by weight hydrogen peroxide throughout the entire drip irrigation system, i.e. the concentration of hydrogen peroxide in the irrigation water leaving the drip irrigation system at the emitter furthest away from the point where the treatment composition is added shall be at least 0.5 ppm by weight.

The drip irrigation system may be a sub-surface irrigation system or an above surface irrigation system. The conduits of the drip irrigation system preferably have an inner surface made from an organic polymer, such as polyethylene, polypropylene or polyvinylchloride. The drip irrigation system preferably has a single feed point for irrigation water and the treatment composition is added to a water stream introduced at this feed point.

The treatment composition is preferably added to the water stream with a dosing pump, which preferably provides a constant dosing rate or is controlled based on a flow measurement of the water stream to provide a constant ratio between the addition rate and the water flow rate. The dosing pump preferably comprises a safety device which stops addition of the treatment composition when the flow of the water stream stops. The treatment composition may be added with any dosing pump suitable for dosing a hydrogen peroxide solution, where the dosing pump is designed to prevent excess pressure build-up from oxygen gas formed by hydrogen peroxide decomposition.

The method of the invention is preferably carried out with a treatment composition that has been prepared by mixing hydrogen peroxide with an aqueous solution of 1-hydroxyethylidene-1,1-diphosphonicacid, which aqueous solution contains less than 70 ppm chloride, less than 20 ppm iron and less than 10 ppm arsenic, each based on the weight of 1-hydroxyethylidene-1,1-diphosphonic acid contained in the aqueous solution.

The method of the invention is preferably carried out with a treatment composition that has been prepared by mixing an aqueous hydrogen peroxide solution having a total organic carbon content of less than 100 mg/kg with an aqueous solution of 1-hydroxyethylidene-1,1-diphosphonic acid. An aqueous hydrogen peroxide solution with a total organic carbon content of less than 100 mg/kg may be obtained by distillation, crystallization or reverse osmosis, with reverse osmosis being preferred. The use of a treatment composition prepared from an aqueous hydrogen peroxide solution having a total organic carbon content of less than 100 mg/kg prevents accumulation of alkylanthraquinones and of degradation products of alkylanthraquinones, used in the commercial process for producing hydrogen peroxide, in soil irrigated with the treated water stream.

The method of the invention efficiently prevents the formation of deposits, both from biofilms and from mineral scale, without negatively affecting the growth of irrigated plants. In fact, in many cases plant growth is stimulated by hydrogen peroxide providing oxygen at the plant roots, thus preventing harm to the roots by anoxia. Deposit formation can be prevented throughout the entire drip irrigation system, even for systems with a slow flow of water, where it can take more than 10 hours for water introduced into the drip irrigation system to reach the most distant irrigation emitter, because the combination of hydrogen peroxide and 1-hydroxyethylidene-1,1-diphosphonic acid provides better stability of the peroxide in the drip irrigation system than commercially used compositions comprising hydrogen peroxide without additive or with another additive.

The method of the invention can be carried out safely without a risk of exposing operating personnel to hazardous vapors, such as vapors containing chlorine, chlorine dioxide or peroxyacetic acid.

### Examples

### Examples 1 to 3

### Stability of compositions containing hydrogen peroxide and different organophosphonic acids

Solutions containing 30 % by weight of hydrogen peroxide and 3 % by weight of an organophosphonic acid were stored at ambient temperature and the content of hydrogen peroxide and of organophosphonic acid were monitored by ion chromatography. In example 1, the organophosphonic acid was 1-hydroxyethylidene-1,1-diphosphonic acid (HEDP) supplied by Italmatch Chemicals S.p.A. under the trade name Dequest^{®} 2010 LC, which contained 22 ppm chloride, less than 0.4 ppm iron and less than 0.2 ppm arsenic, each based on the weight of 1-hydroxyethylidene-1,1-diphosphonic acid. In comparative example 2, the organophosphonic acid was amino-tris(methylenephosphonic acid) (ATMP) supplied by Zschimmer & Schwarz Mohsdorf GmbH & Co. KG under the trade name Cublen^{®} AP1. In comparative example 3, the organophosphonic acid was diethylenetriamine-penta(methylenephosphonic acid) (DTPMP) supplied by Zschimmer & Schwarz Mohsdorf GmbH & Co. KG under the trade name Cublen^{®} DNC 450. Table 1 shows the concentrations of hydrogen peroxide and charged organophosphonic acid determined by ion chromatography. The results demonstrate that a composition containing hydrogen peroxide and 1-hydroxyethylidene-1,1-diphosphonic acid is more storage stable than compositions containing hydrogen peroxide and an aminophosphonic acid.

**Table 1**

| Storage time in days | Example 1 | | Comparative example 2 | | Comparative example 3 | |
|---|---|---|---|---|---|---|
| | H₂O₂ in % by weight | HEDP in area-% | H₂O₂ in % by weight | ATMP in area-% | H₂O₂ in % by weight | DTPMP in area-% |
| 0 | 30.5 | 22 | 30.3 | 31 | 30.2 | 14 |
| 1 | 30.4 | 23 | 30.5 | 26 | 30.4 | 0 |
| 2 | 30.6 | 25 | 30.3 | 22 | 30.3 | 0 |
| 3 | 30.5 | 23 | 29.3 | 17 | 28.9 | 0 |
| 6 | 30.3 | 24 | 29.0 | 6 | 28.8 | 0 |
| 8 | 30.3 | 25 | 29.0 | 2 | 28.9 | 0 |
| 10 | 30.3 | 27 | 29.3 | 0 | n.d. | n.d. |

| | | | | | | |
|---|---|---|---|---|---|---|
| n.d. = not determined | | | | | | |

### Examples 4 to 8

### Thermal stability of compositions containing hydrogen peroxide and different organophosphonic acids

Solutions containing 30 % by weight of hydrogen peroxide and 3 % by weight of organophosphonic acid were prepared starting from a hydrogen peroxide stock solution purified by reverse osmosis. In example 4, 1-hydroxyethylidene-1,1-diphosphonic acid (HEDP) supplied by Italmatch Chemicals S.p.A. under the trade name Dequest 2010 LC was used, which contained 22 ppm chloride, less than 0.4 ppm iron and less than 0.2 ppm arsenic, each based on the weight of 1-hydroxyethylidene-1,1-diphosphonic acid contained in the product. In comparative example 5, HEDP supplied by Connect Chemicals GmbH under the trade name HEDP was used, which contained 73 ppm chloride, 27 ppm iron and 90 ppm arsenic. In comparative example 6, 2-phosphonobutane-1,2,4-tricarboxylic acid (PBTC) supplied by Zschimmer & Schwarz Mohsdorf GmbH & Co. KG under the trade name Cublen^{®} P 50 was used. In comparative example 7, amino-tris(methylenephosphonic acid) (ATMP) supplied by Zschimmer & Schwarz Mohsdorf GmbH & Co. KG under the trade name Cublen^{®} AP1 was used. In comparative example 8, no organophosphonic acid was added to the hydrogen peroxide.

For each solution, thermal decomposition was determined by diluting the solution with deionized water to about 16 % by weight hydrogen peroxide, storing samples for 24 h at 20 °C and 96 °C, determining the hydrogen peroxide content in the stored samples by cerimetric titration and calculating the thermal decomposition as the concentration difference between the samples stored at different temperatures divided by the concentration of the sample stored at 20 °C. Table 2 summarizes the results. The results demonstrate that a composition containing hydrogen peroxide and 1-hydroxyethylidene-1,1-diphosphonic acid with a low content of arsenic has a high thermal stability. Thermal stability of hydrogen peroxide determined for 24 h at 96 °C is known to correlate well with storage stability of hydrogen peroxide at ambient temperature for periods of up to a year.

**Table 2**

| Example | Organophosphonic acid | Thermal decomposition in % |
|---|---|---|
| 4 | HEDP < 0.2 ppm As | 0.7 |
| 5* | HEDP 90 ppm As | 8.1 |
| 6* | PBTC | 4.8 |
| 7* | ATMP | 12.2 |
| 8* | none | 0.1 |

| | | |
|---|---|---|
| *comparative example | | |

### Examples 9 to 13

### Stability of treatment compositions diluted with a nutrient solution

Different treatment compositions were added to a nutrient solution containing 0.1 mmol/l ammonium, 2.5 mmol/l potassium, 6.8 mmol/l calcium, 1.2 mmol/l magnesium, 3.7 mmol/l sulfate, 8.7 mmol/l nitrate, 0.05 mmol/l phosphorous, 2.5 µmol/l iron, 9.0 µmol/l boron, 0.4 µmol/l copper, 0.1 µmol/l molybdenum, 0.8 µmol/l zinc and 0.1 µmol/l manganese in an amount providing a total peroxide content, calculated as hydrogen peroxide, of 25 mg/l. In example 9, treatment composition A was used, which was an aqueous solution containing 30 % by weight hydrogen peroxide and 3 % by weight 1-hydroxyethylidene-1,1-diphosphonic acid. In comparative example 10, treatment composition B was used, which was an aqueous solution containing hydrogen peroxide supplied by Aquamar Disinfection Products BV under the trade name Freebac-Clearoxyl^{®}. In comparative example 11, treatment composition C was used, which was an aqueous solution containing hydrogen peroxide supplied by de Jong Eco-Services under the trade name LOXYDE^{®}. In comparative example 12, treatment composition D was used, which was an equilibrium peroxyacetic acid solution containing 2 % by weight peroxyacetic acid, 47 % by weight hydrogen peroxide and 2 % by weight polyphosphoric acid. In comparative example 13, treatment composition E was used, which was an equilibrium peroxyacetic acid solution containing 5 % by weight peroxyacetic acid, 25 % by weight hydrogen peroxide and 3 % by weight of a copolymer of acrylic acid and acrolein.

The mixtures of treatment composition and nutrient solution were stored in the dark at ambient temperature and peroxide contents were determined daily with Quantofix® peroxide test strips using a Quantofix® reader. Table 3 summarizes the results. The results demonstrate that a treatment composition containing hydrogen peroxide and 1-hydroxyethylidene-1,1-diphosphonic acid is stable when mixed with a nutrient solution.

**Table 3**

| Storage time in days | Peroxide content in mg/l | | | | |
|---|---|---|---|---|---|
| | Example 9 (comp. A) | Comparative example 10 (comp. B) | Comparative example 11 (comp. C) | Comparative example 12 (comp. D) | Comparative example 13 (comp. E) |
| 0 | 26 | 24 | 27 | 26 | 25 |
| 1 | 25 | 12 | 15 | 25 | 25 |
| 2 | 25 | 0 | 5 | 24 | 14 |
| 3 | 25 | 0 | 0 | 21 | 8 |
| 4 | 24 | 0 | 0 | 17 | 6 |

### Example 14

### Test for scale inhibition efficiency

The efficiency for preventing the precipitation of calcium sulfate from aqueous solution was determined with the calcium sulfate precipitation test of NACE standard TM0374-2007. A composition prepared as in example 1 was added in amounts providing the concentrations of hydrogen peroxide and HEDP in the test brine given in table 4. The hydrogen peroxide and the HEDP used for making the composition were tested for comparison.

The results demonstrate that at levels of 50 ppm hydrogen peroxide and 5 ppm HEDP, as well as at 100 ppm hydrogen peroxide and 10 ppm HEDP, the treatment composition of the invention provides better scale prevention than expected from the individual effects of its components hydrogen peroxide and HEDP.

**Table 4**

| Hydrogen peroxide concentration in ppm | HEDP concentration in ppm | % inhibition in calcium sulfate precipitation test |
|---|---|---|
| 10 | 1 | 23 |
| 50 | 5 | 74 |
| 100 | 10 | 74 |
| 10 | | -8 |
| 50 | | -9 |
| 100 | | -9 |
| | 1 | 39 |
| | 5 | 77 |
| | 10 | 74 |

### Example 15

### Addition of treatment compositions to a drip irrigation system with dripper valves

Treatment compositions were tested in a greenhouse for soilless cultivation of cucumbers on a rock wool substrate using a drip irrigation system with parallel distribution conduits and 25 drippers along each conduit, with the drippers inserted into the substrate and connected to the conduits through dripper valves. Irrigation was carried out during daytime with a nutrient solution containing 0.7 mmol/l ammonium, 13.3 mmol/l potassium, 6.7 mmol/l calcium, 2.3 mmol/l magnesium, 2.2 mmol/l sulfate, 25.1 mmol/l nitrate, 2.4 mmol/l phosphorous, 18.8 µmol/l iron, 50.0 µmol/l boron, 1.1 µmol/l copper, 0.5 µmol/l molybdenum, 10.0 µmol/l zinc and 12.5 µmol/l manganese, using irrigation cycles of 4 min each, increasing irrigation from 3-4 cycles per day to 10-11 cycles during the 76 day growth period. The treatment compositions A to E used in examples 9-13 were dosed to different parallel conduits of the drip irrigation system during each irrigation cycle in an amount providing a concentration of 50 mg/l of peroxide in the irrigation water stream. Due to the hold-up of the distribution conduits, it took one irrigation cycle for the water stream to pass from the point of dosing the treatment composition to the first dripper of the conduit, about two irrigation cycles to dripper 12 and up to 6 irrigation cycles to the last dripper of the conduit.

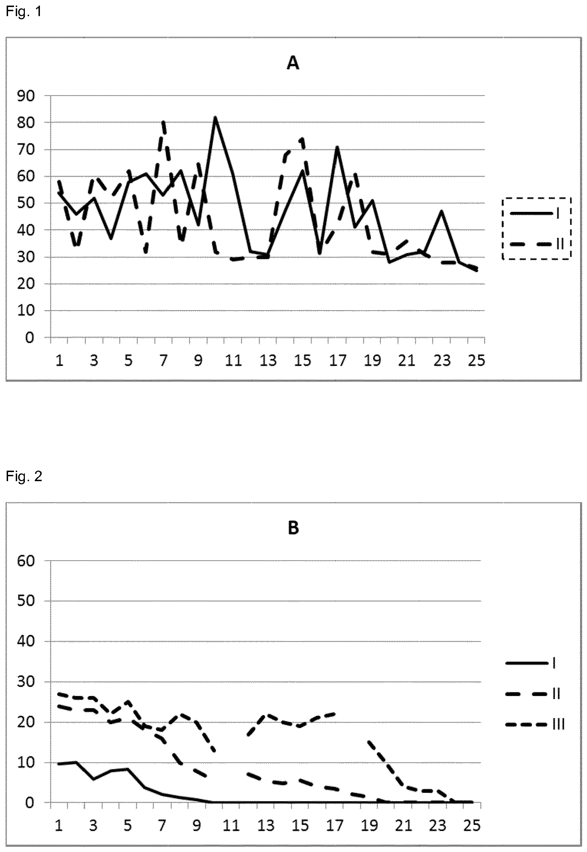

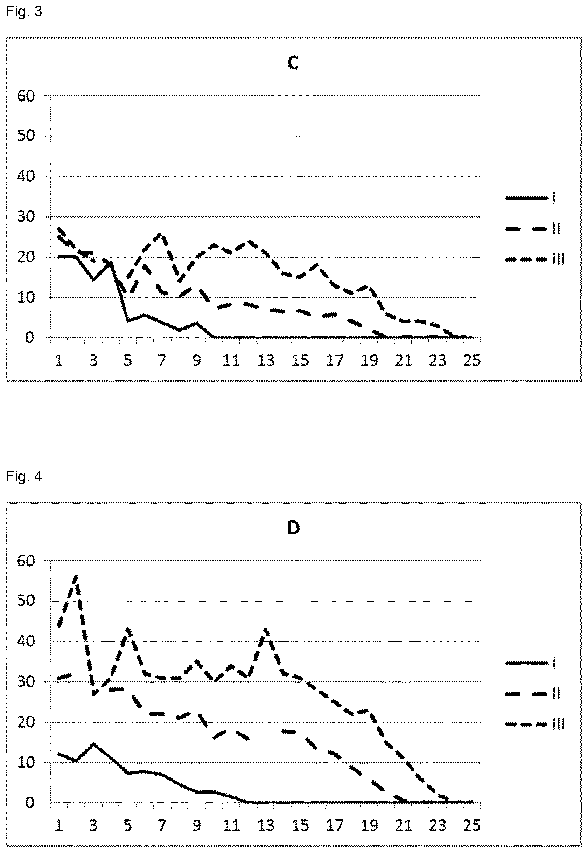

Loss of peroxide in the distribution conduits was determined by an experiment, where the first irrigation cycle of the day was 16 h after the last previous irrigation cycle. Concentrations of peroxide were determined with Quantofix® peroxide test strips using a Quantofix® reader for each dripper before the first irrigation cycle (graph I), and about 10 min after the second and the third irrigation cycle (graphs II and III). Fig. 1 to 4 show the peroxide concentrations in mg/l along the distribution conduits to which treatment compositions A to D were added, with dripper 1 being the first and dripper 25 being the last dripper along the conduit.

During the growth period, blocking of drippers occurred for treatment composition C at 14 out of 50 drippers, for treatment composition D at 4 out of 50 drippers and for treatment composition E at 47 out of 50 drippers. No blocking of drippers occurred for treatment compositions A and B. Blocking of drippers was mainly due to bacterial slime.

After the growth period, the distribution conduits were flushed and the amount of deposits flushed from the conduits was rated visually on a scale from 0 (no deposit) to 10 (much deposit). Ratings were 0 for treatment composition A and a distribution conduit to which no treatment composition was added, 3 for treatment compositions B and D, 5 for treatment composition C and 8 for treatment composition E. The deposits were mainly biofilms containing bacteria and fungi. A visual inspection of the plant roots showed no root damage.

The results demonstrate that treatment composition A according to the invention prevents biofilm formation without damaging plant roots, whereas other treatment compositions containing hydrogen peroxide or peroxyacetic acid can lead to biofilm formation due to insufficient stability of the peroxide in the drip irrigation system and organic additives which serve as a carbon source for microbiological growth.

### Example 16

### Addition of treatment compositions to a drip irrigation system with dripper valves

Treatment compositions were tested in a greenhouse for cultivation of tomatoes on soil using the same drip irrigation system as in example 14. Irrigation was carried out during daytime with the nutrient solution of examples 9-13, increasing the irrigation time from 5 minutes per day to about 25 minutes per day during the 6.5 months growth period. The treatment compositions A to E used in examples 9-13 were dosed to different parallel conduits of the drip irrigation system during irrigation in an amount providing a concentration of 25 mg/l of peroxide in the water stream.

During the growth period, blocking of drippers occurred for treatment composition B at 1 out of 50 drippers, for treatment composition C at 2 out of 50 drippers and for treatment composition E at 6 out of 50 drippers. No blocking of drippers occurred for treatment compositions A and D.

The total weight of tomatoes harvested per plant was determined for the plants irrigated with addition of different treatment compositions and is given in table 5.

**Table 5**

| Treatment composition added | Total weight of tomatoes harvested per plant in kg |
|---|---|
| A | 8.4 |
| B | 7.9 |
| C | 7.7 |
| D | 8.4 |
| E | 7.2 |
| none | 7.2 |

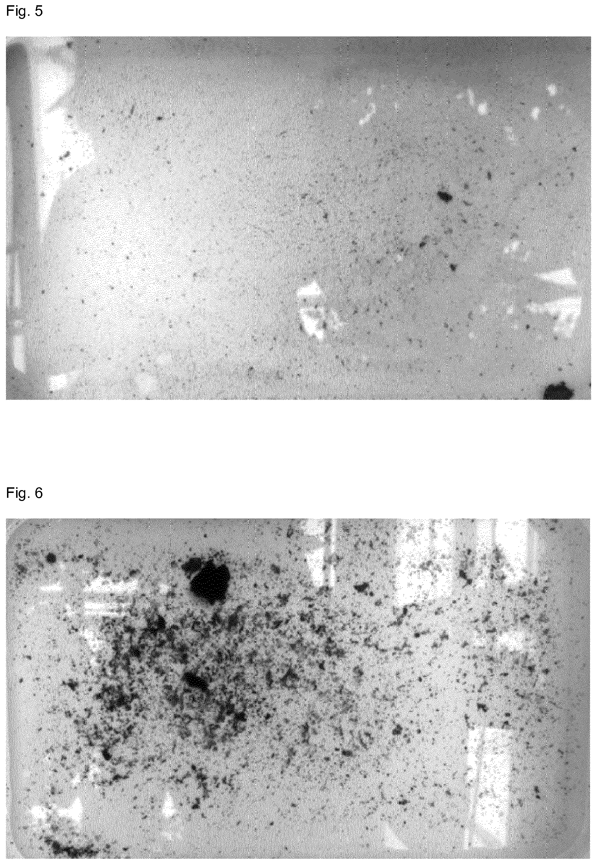

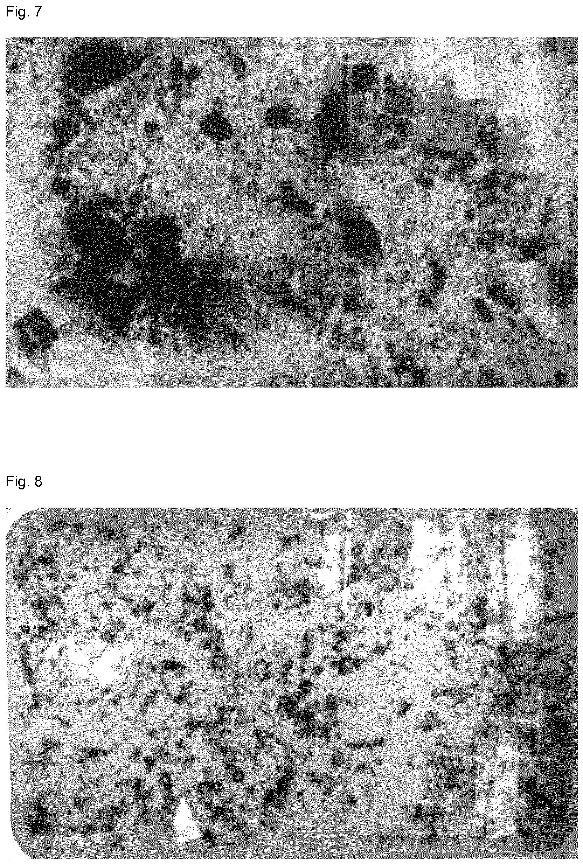

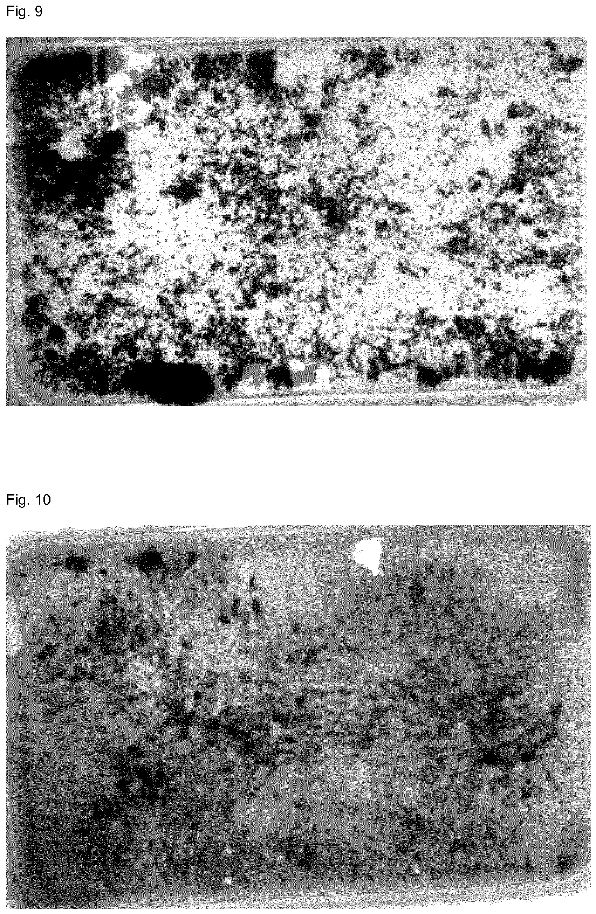

After the growth period, the distribution conduits were flushed. The deposits flushed from the conduits with addition of treatment compositions A to E and a control conduit without addition of a treatment composition are shown in Fig. 5 to 10.

The results demonstrate that treatment composition A according to the invention prevents biofilm formation and improves plant growth.

## Claims

1. A treatment composition for preventing deposit formation in a drip irrigation system, containing from 10 to 50 % by weight hydrogen peroxide, from 1 to 5 % by weight 1-hydroxyethylidene-1,1-diphosphonic acid and up to 0.5 ppm by weight arsenic.

2. The treatment composition of claim 1, containing from 0.01 to 0.5 ppm by weight arsenic.

3. The treatment composition of claim 1 or 2, obtainable by mixing hydrogen peroxide with an aqueous solution of 1-hydroxyethylidene-1,1-diphosphonic acid, said aqueous solution containing less than 70 ppm chloride, less than 20 ppm iron and less than 10 ppm arsenic, each based on the weight of 1-hydroxyethylidene-1,1-diphosphonic acid contained in said aqueous solution.

4. The treatment composition of any one of claims 1 to 3, obtainable by mixing a hydrogen peroxide solution having a total organic carbon content of less than 100 mg/kg with an aqueous solution of 1-hydroxyethylidene-1,1-diphosphonic acid.

5. Use of a treatment composition according to any one of claims 1 to 4 for preventing deposit formation in a drip irrigation system.

6. A method for preventing deposit formation in a drip irrigation system, wherein a treatment composition containing from 10 to 50 % by weight hydrogen peroxide, from 1 to 5 % by weight 1-hydroxyethylidene-1,1-diphosphonic acid and up to 0.5 ppm by weight arsenic is added to a water stream introduced into the drip irrigation system in an amount providing a concentration of from 5 to 100 ppm by weight hydrogen peroxide and from 0.5 to 10 ppm by weight 1-hydroxyethylidene-1,1-diphosphonic acid in said water stream.

7. The method of claim 6, wherein the treatment composition is added to the water stream after dilution to a hydrogen peroxide content of from 0.05 to 1.0 % by weight.

8. The method of claim 7, wherein the treatment composition is diluted with an aqueous nutrient solution.

9. The method of any one of claims 6 to 8, wherein the treatment composition is added to the water stream continuously.

10. The method of any one of claims 6 to 8, wherein the treatment composition is added to the water stream intermittently.

11. The method of claim 10, wherein the treatment composition is added during at least 50 % of the time the water stream is flowing.

12. The method of any one of claims 6 to 11, wherein the treatment composition contains from 0.01 to 0.5 ppm by weight arsenic.

13. The method of any one of claims 6 to 12, wherein the treatment composition contains less than 10 ppm arsenic based on the weight of 1-hydroxyethylidene-1,1-diphosphonic acid.

14. The method of any one of claims 6 to 13, wherein the treatment composition has been prepared by mixing hydrogen peroxide with an aqueous solution of 1-hydroxyethylidene-1,1-diphosphonic acid, said aqueous solution containing less than 70 ppm chloride, less than 20 ppm iron and less than 10 ppm arsenic, each based on the weight of 1-hydroxyethylidene-1,1-diphosphonic acid contained in said aqueous solution.

15. The method of any one of claims 6 to 14, wherein the treatment composition has been prepared by mixing a hydrogen peroxide solution having a total organic carbon content of less than 100 mg/kg with an aqueous solution of 1-hydroxyethylidene-1,1-diphosphonic acid.
